# EUROPEAN PATENT APPLICATION

(11) **EP 1 315 072 A1**
(43) Date of publication of application: **28.05.2003**
(21) Application number: 01830724.9
(22) Date of filing: 23.11.2001
(51) Int. Cl.: G06F 3/00, G06F 3/033, H04N 7/14

(54) **General-purpose apparatus for execution of multimedia applications**

(71) Applicant: Siemens Information and Communication Networks S.p.A., 20126 Milano (IT)
(72) Inventor: Rosina, Giancarlo, 20018 Sedriano (IT)
(74) Representative: Giustini, Delio

(57) **Abstract**

The components (3 - 7) of an apparatus (200) for execution of multimedia application are shared among a portable user's equipment (10) and a remote stationary equipment (11) forming an entity of a telecommunication network (8). The user's equipment comprises a mobile phone (5), a projector (6) forming on a surface (14) a virtual display (15) and a virtual keyboard (2A) and a camera (7) for recording images. The remote equipment (11) comprises processing and storage means (3, 4) hosting the whole of software and data necessary for execution of an application. Any upgrading and updating of the apparatus (200) is performed at the remote equipment (11), without affecting the user's equipment (10).

## Description

### Field of the invention

The present invention refers to multimedia systems, and more particularly it concerns an apparatus, including virtual components, for execution of multimedia applications.

Multimedia applications are nowadays broadly diffused both for working activities and for amusement. The hardware components required for execution of an application depend on the complexity of the application. A general-purpose multimedia device shall include video/audio facilities, a computer (generally a PC, that can be considered as the combination of a video, a keyboard, a processor and a memory), a communication unit (e. g. a cellular phone), a camera and a projector, even though in the simplest cases a PC or even less complex equipment may be enough.

Especially for applications concerning working activity, the user's mobility is to be taken into account. Even if some of the components mentioned above (e. g. the projector or the camera) might be available at the site where the application is to be executed, the user must in any case bring with him/her the remaining components, in particular at least his/her own PC and cellular phone. This may be uncomfortable, even if the size and the weight of portable devices are nowadays rather reduced. Moreover, possibly the user has to suitably configure or update his/her PC for the particular application, what might not be so easy and is in any case time consuming. Another annoying aspect is the need to wait for the bootstrap time whenever a working session is initiated.

### Background art

An integrated communication device allowing setting up multimedia communications (voice, video and data) is disclosed in WO-A 96/35288. That document discloses a radiotelephone incorporating a computer, an image display device and a camera. The image display device is either the computer screen or a display mounted in the radiotelephone so as to be retracted and extracted; in the latter case the display is associated with an optical system for allowing a user to see images while he/she is using the telephone.

Such a device is only a communication device, and not a general-purpose device: it cannot be used for instance for video games, remote control of instruments and so on. Moreover, since the computer is incorporated in the portable device, the problems related with computer updating and configuration and with the bootstrap time still exist. Lastly, the permanent integration of at least part of the individual components into a single unit (the radiotelephone) makes individual use of such components difficult or at least uncomfortable.

EP-A 0975132 discloses a multimedia device comprising a mobile phone and a camera unit, which can operate either independently or jointly. Yet, also that system is not a general-purpose multimedia device. Moreover, video communication is unidirectional and it is impossible for the user to access a remote unit to receive therefrom multimedia information.

### Object and summary of the invention

It is an object of the invention to provide an apparatus for execution of multimedia applications, which can be used for any kind of multimedia applications, and not only for communication, is of comfortable use and solves the problems related with the transportability or on-site availability of the hardware components required to execute the application.

According to the invention, this is obtained by an apparatus wherein the communication means (mobile phone or the like) and the means for presenting and recording the multimedia information are included in a portable user's equipment where the presenting means are arranged to create a virtual display for presentation of visual information, and the processing and storage means are included in a remote stationary equipment, which forms an entity of the telecommunication network and is accessible by the portable equipment via the telecommunication network, and host the whole of the software and data necessary for the execution of the application based on commands sent by the user's equipment over the telecommunications network, whereby any updating and upgrading of the processing and storage means and of the applications is carried out on the remote equipment without affecting the user's equipment.

Advantageously, the presenting means are arranged to create also an image of a keyboard, and the recording means are arranged to record the movements of the user's fingers on the keyboard image.

The combination of a projector for projecting a keyboard image on a surface and of a camera for recording the movements of the fingers on the virtual keyboard is known from DE-A 29802435 Yet, the projector-camera combination is intended for use at a cash point machine, which clearly is a stationary equipment. No execution of multimedia applications is possible.

In an embodiment of the invention, the processing and storage means in the remote equipment act as servers connected to the network and substantially form a virtual remote PC.

A server including a virtual PC is disclosed in GB-A 2320595. The server cooperates with a gateway to control the access by PC terminals to an information network, e. g. the Internet, to prevent predetermined accesses. The virtual PC merely has tasks of access control and operates only in the direction from the user to the network. Moreover, the user's equipment comprises only a PC terminal, so that the problems concerning availability and portability of the whole of the components required for executing the multimedia application is still unsolved.

### Brief description of the drawings

A preferred embodiment of the invention will now be disclosed with reference to the accompanying drawings, in which:
- Fig. 1 is a functional block diagram showing the hardware architecture of a conventional apparatus for execution of multimedia applications;
- Fig. 2 is a functional block diagram showing the hardware architecture of an apparatus according to the invention;
- Fig. 3 is a schematic diagram showing the user's equipment of the apparatus according to the invention during operation; and
- Fig. 4 is a diagram showing the introduction of the invention into a land mobile network.

### Detailed description of a preferred embodiment of the Invention

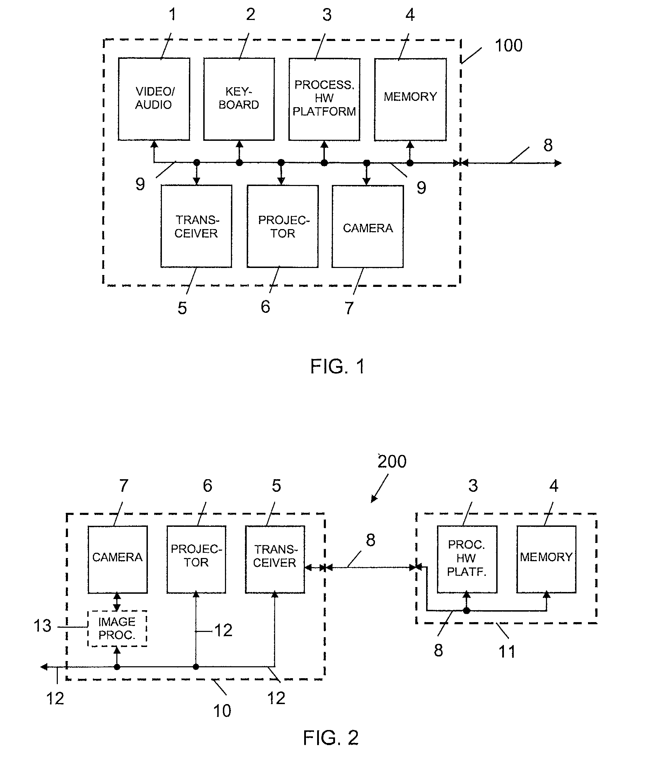

As shown in Fig. 1, a general-purpose apparatus for execution of multimedia applications, denoted in the whole by 100, comprises:
- video and audio facilities 1 (e. g. a video terminal and loudspeakers) for displaying/playing the video and respectively the audio components of a multimedia signal;
- a keyboard 2 for inputting the commands required for execution of the application;
   -- a processing hardware platform 3 and a memory 4 for data and programs related to the applications and for mass storage;
- a communication unit 5 (transceiver) for connection to a telecommunications network, schematically indicated by the link 8; the communication unit may be e. g. a mobile phone (for a land mobile network or a satellite network) or a phone connected to the public switched telephone network (fixed phone); thus communication unit 5 generally includes speech input and output devices;
- a projector 6 for projecting on a suitable surface the same images as displayed on the video terminal or other images belonging to the application;
- a camera 7, for recording images and possibly transmitting them to another location.

The device components can be connected or associated in various manners. The connection is schematised by line 9 that, for sake of simplicity, connects all blocks 1 - 7 with each other and with network 8. For instance, blocks 1 - 4 in the whole can be implemented by a PC, as already said; the PC can be connected to projector 6 when projection on an external screen of the images appearing on the PC screen is desired; the PC will have access to telecommunications network 8, directly or through communication unit 5; video/audio facilities 1, keyboard 2, memory 3, processor 4, communication unit 5 and camera 7 can be integrated into a single device, as disclosed in WO- A 96/35288; communication unit 5 and camera 7 can be associated as disclosed in EP-A 0 975132.

In the conventional multimedia devices, the whole of equipment 1 is to be made available at the site where the user is to execute the application and this, as said in the introduction, may cause problems in case of user's mobility, even when the user simply has to roam from one room to another staying in the same building.

Referring now to Fig. 2, where the components identical to those described with reference to Fig. 1 are denoted by the same reference numerals, the device according to the invention, denoted in the whole 200, is split into two parts 10 and 11: part 10 constitutes a mobile or transportable user's equipment, whereas part 11 is a remotely located stationary equipment associated with telecommunications network 8.

User's equipment 10 now only includes communication unit 5, camera 6 and low power projector 7. The two latter units are connected via line 12 with communication unit 5, which interfaces the user's equipment with telecommunications network 8. Of course, all units will be battery-operated, to allow mobility. Remote equipment 11 includes processing platform 3 and memory 4 with all necessary software for executing the applications and is accessible by the user via telecommunications network 8 by using communication unit 5. Remote equipment 11 substantially acts as a server for the multimedia applications and in practice constitutes a virtual remote PC. Remote unit 11 can easily provide for the backup functions, which normally are not easy and comfortable with a normal PC, both at home or at office.

The user can access the remote equipment by dialling a particular number on communication unit 5. In case a plurality of applications are available, a different number may be provided for each application, or a certain number allows accessing the remote equipment, and then the user can navigate along a menu, either by means of the keyboard of communication unit 5 or by means of a virtual keyboard created by projector 6. Different solutions are of course possible.

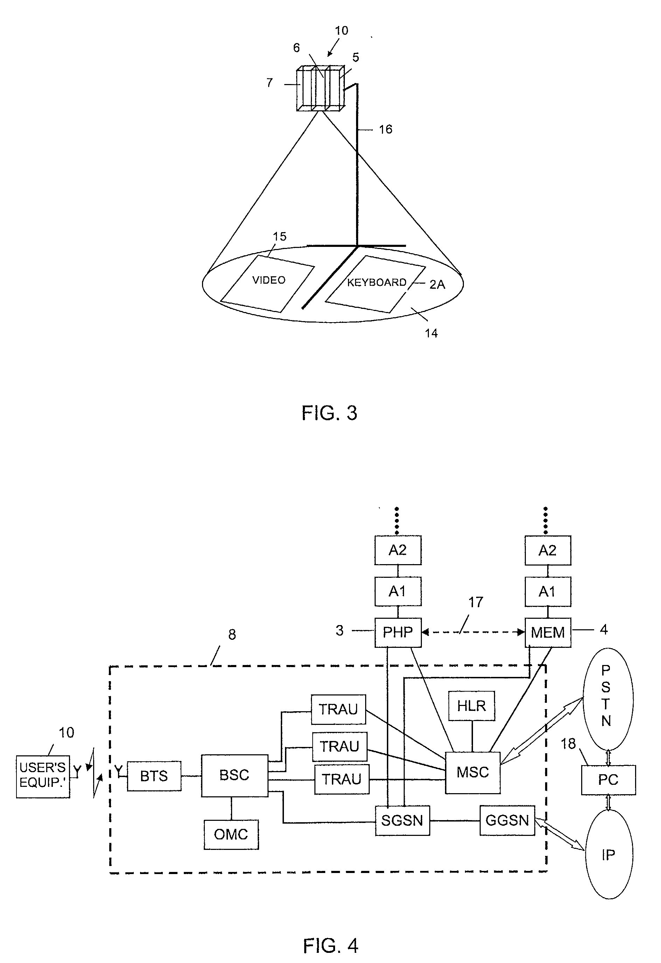

Upon user's access to an application, remote equipment 11 will supply user's equipment 10, via network 8, with the multimedia information and, possibly, with images of a keyboard and of a menu with associated keys for selection of the application. Projector 6 will project the images onto a suitable surface 14, as shown in Fig. 3, thereby creating a virtual screen or display 15 and a virtual keyboard 2A.

When virtual keyboard 2A is present, camera 7 will record the movements of the user's hand on virtual keyboard 2A and will transmit the commands inputted by the user to communication unit 5 and hence to processing platform 3. The latter will interpret the commands sent and consequently govern the evolution of the application.

Similarly, the menu, if any, can be created on virtual screen 15 as a virtual control panel or virtual touch screen, and camera 7 will point to virtual screen 15 to detect the user's selection.

Remote equipment 11 might supply different keyboards for different applications. A keyboard can also include analogue controls, if the application requires so (for instance, video games). Of course, also a mouse can be implemented in virtual form on the keyboard.

The analogue controls can be implemented via markers positioned by the remote control on the virtual keyboard. Special fingers movements can be defined to hook the markers, to move or double click them and to unhook them, giving equivalent functionalities to those of conventional devices. For instance, if the forefinger is put on a marker, the position of the thumb or other fingers can serve as a "hook marker", "move marker", "double click marker", "unhook marker" commands.

With this method, a mouse, a steering wheel, an analogue regulator (i.e. volume regulator) can be implemented.

Transmission of the images of the finger movements towards the remote equipment (uplink transmission) could require some measure to avoid bandwidth problems.

To this aim, it is preferred that user's equipment 10 includes an image processing chip, shown by dashed-line block 13 in Fig. 2, that converts the images into commands already at the user's side. The addition of an image-processing chip to the camera circuitry does not affect the overall bulk of the user's equipment.

Since the image processing may depend on the application, the image processing software may be downloaded case by case on the local image processing chip.

If the image processing is carried out at the remote equipment, it could be convenient that camera 7 is arranged to transmit only differential information, and that a packet switched connection is set up between communication unit 5 and remote equipment 11 for this purpose. Another possibility in order to avoid bandwidth problems is to use slow video techniques or low resolution video images.

Of course, bandwidth problems affect also downlink transmission of the video signals of the application. Therefore packet transmission of differential information or use of slow video techniques or low resolution video signals could be envisaged also for downlink transmission. If communication unit 5 and the application require so, even broadband signals for high quality video could be transmitted.

Connection 12 between the components of the user's equipment must allow arranging the different components in different manners depending on different use conditions. Thus, for instance, both projector 6 and camera 7 (as well as communication unit 5) can be mounted onto a suitable support 16 so as to point to a common surface 14 (for instance a desk) onto which both virtual keyboard 2A and virtual screen 15 are created, as shown in Fig. 3. In the alternative, projector 6 can project the video signals onto a projection screen or a wall. In such case, projection of the keyboard image can be dispensed with, and a sheet of paper with printed indicia or indicia sketched with a writing instrument could serve as virtual keyboard 2A. Camera 7, when it has not to point to the keyboard, could be available for a normal video connection or normal video recording.

Virtual keyboard 2A could be dispensed with and replaced by a speech recogniser, which is preferably located in processing platform 3 in remote equipment 11. Thus, the user can use the device whenever he/she has to keep his/her hands free, e. g. while driving a car, or whenever a support for the virtual keyboard is not available, for instance while the user is walking.

Moreover, connection 12 needs not to be a permanent connection, so as to allow and make easy individual use of each component.

If a real video screen or a real keyboard are available where the application is executed, the apparatus should allow also use of such real components, which can offer more use comfort and/or better video quality. For instance, user's equipment 10 could be connected thereto through connection 12.

Thus, with a minimum set of hardware, a complete PC facility is available, with minimum bootstrap time (the session can be kept active in the remote equipment, and the user has only to wait for the time required to set up the connection; even if the application is not already active, the time necessary to start it is much less than a complete bootstrap process), unlimited memory and unlimited processing capacity. Memory and capacity will simply correspond to the amount the user is willing to pay. The user has not even the problem of the upgrading, which is handled at the remote side and completely transparent for him/her.

Fig. 4 shows the introduction of the invention into a land mobile network operating according to the GSM standards and supporting both circuit switched connections and packet switched connections (GPRS service). The structure of the system network is wholly conventional and the acronyms denoting the different blocks of GSM system are those commonly used in the art, so that they need not to be listed here. In any case the definitions of said acronyms might be found in the ETSI specifications concerning GSM. PSTN and IP denote respectively a fixed telephone network and a packet switched data network. When the invention is connected to such a land mobile network, user's equipment 10 behaves like any mobile terminal connected to the system. Processing platform (PHP) 3 and memory 4 contain software and data for a number of applications A1, A2... and are shown as being connected to both unit MSC and unit SGSN, to allow access by user's equipment 10 through either a circuit switched connection or a packet switched connection. The applications Ai can be added and cancelled at will, without affecting user's equipment 10. If processing platform 3 and memory 4 form two separate servers, as shown in Fig. 4, memory 4 essentially acts as mass memory, whereas the storage facilities serving for the requirements of the application (e. g. a RAM memory, rigid discs, etc.) are included in processing platform 3. Yet, processing platform 3 could use memory 4 as an additional memory area, in which case a direct connection between processing platform 3 and memory 4 could exist, as shown by dashed line 17.

Several different applications can be envisaged for the invention. Among them, the following ones can be mentioned:
- speech services, for which only communication unit 5 is needed;
- office mobility: the invention provides a complete virtual PC, but dispenses the user with all problems concerning upgrading, addition of applications etc., which are handled in remote equipment 11;
- remote control of instruments: the user equipment allows implementing a virtual touch screen;
- image recording with remote storage;
- video games, with either a digital or an analogue keyboard;
- conferencing and meetings;
- interactive video communications: during a session, the invention allows transmitting information affecting the session itself; for instance, the camera may monitor and detect events coming from a broadcast video and send appropriate information/interrupts to the running application or to the user;
- video on demand;
- medical applications: while at the patient's premises, a doctor can look at the whole of the patient medical history (including results of imaging analyses) stored at his/her office.

It is to be appreciated that, in a very simple case, user's equipment 10 could be used merely as a torch while the user is walking.

The advantages of the invention are clear from the previous description and are here summarised:
- only a small, unique and light portable equipment (that can be kept in a pocket) has to be carried around;
- neither software installation nor software maintenance are necessary at the user's side, even when new applications are added;
- power consumption of the device is determined by the needs of user's equipment 10, which no longer includes the processing platform and the memory;
- the processing power at the user's equipment is determined only by the transmission part (and possibly by the image processor, if any) and will not increase as the available applications increase, since addition of applications takes place at the remote equipment;
- the device is compatible and can coexist with current telecommunication approach (including remote storage facilities), and with current handsets and current PCs;
- bootstrap time is minimum and the user, in practice, will deal only with connection time (a few seconds);
- working sessions can be initiated, stopped and resumed without any problem even if the device is switched off and on, because the application sessions can remain active on the remote PC 11.

It is clear that the above description is given only by way of non limiting example, and that changes and modifications are possible without departing from the scope of the invention, as defined in the appended claims. For instance, even though in Fig. 4 a single processing platform 3 and a single memory 4 manage all available applications A1, A2..., a processing unit 3 and a memory 4 could be provided for each application, whereby a plurality of virtual remote PC's, one for each application, is created. Moreover, a conventional PC 18 could be connected to network 8 in addition or in alternative to the server(s) provided by the network operator. Preferably, PC 18 is connected to PSTN and/or IP. The user will use PC 18 when at home or at office and will have a remote access to it in case of mobility. Such a solution allows the user to manage himself/herself the processing platform, the software upgrade etc. and also directly to provide for security, backup etc. independently of an operator.

## Claims

1. Apparatus for the execution of multimedia applications, comprising communication means (5), including: speech input/output facilities, for connection to a telecommunications network (8) over which multimedia information and commands are conveyed; means (6) for presenting the information to a user; means (7) for recording multimedia information; processing means (3) and storage means (4), **characterised in that** the communication means (5) and the means (6, 7) for presenting and recording the information form a portable user's equipment (10) where the presenting means (6) are arranged to create a virtual display unit (15) for presentation of visual information, and the processing and storage means (3, 4) are included in a remote stationary equipment (11), which forms an entity of the telecommunication network (8) and is accessible by the portable equipment (10) via the telecommunication network (8), and host the whole of the software and data necessary for the execution of the application upon reception of commands sent by the user's equipment (10) over the telecommunications network (8), so that any updating and upgrading of the processing and storage means and of the applications is carried out on the remote equipment (11) without affecting the user's equipment (10).

2. Apparatus as claimed in claim 1, **characterised in that** said presenting and recording means (6, 7) include:
- a low power projector (6) for projecting images coming from the remote equipment (11) on a surface (14), to form said virtual display unit (15); and
- a camera (7) for recording images at the user's side and/or establishing a video communication with the remote equipment (11);
means (12) being provided for establishing a temporary connection of the projector (6) and the camera (7) with each other and with said communication means (5), to allow independent or joint use.

3. Apparatus as claimed in claim 2, **characterised in that** the remote equipment (11) is arranged to supply the user's equipment (10) with images of a keyboard for projection on said surface (14), whereby a virtual keyboard (2A) is created.

4. Apparatus as claimed in claim 3, **characterised in that** said virtual keyboard (2A) comprises virtual means for generating digital and/or analogue commands.

5. Apparatus as claimed in claim 4, **characterised in that** the virtual means for generating analogue commands comprise markers positioned by the remote equipment (11) on the virtual keyboard (2A), special finger movements being defined for the marker operations.

6. Apparatus as claimed in claim 5, **characterised in that** the markers include at least a marker defining a virtual mouse,

7. Apparatus as claimed in claim 5 or 6, **characterised in that** the special finger movements include movements implementing "hook/unhook marker", "move marker", "double click on marker" commands.

8. Apparatus as claimed in any of claims 3 to 7, **characterised in that** the remote equipment (11) is arranged to supply the user's equipment (10) with keyboard images allowing creation of different virtual keyboards (2A) for different applications.

9. Apparatus as claimed in claim 2, **characterised in that** the remote equipment (11) is arranged to supply the user's equipment (10) with images of a menu for the selection of an application or of operations to be performed during execution of an application, and of selection keys, whereby a virtual control panel is created on the virtual display unit (15).

10. Apparatus as claimed in any of claims 3 to 9, **characterised in that** said camera (7) is arranged to detect the movements of the user's fingers on the virtual keyboard (2A) or the virtual control panel.

11. Apparatus as claimed in any of claims 2 to 10, **characterised in that** said user's equipment (10) further includes image processing means (13) associated with said camera (7) for processing and compressing recorded images relevant to the movements of the user's fingers on the virtual keyboard (2A) or the virtual control panel.

12. Apparatus as claimed in claim 11, **characterised in that** said image processing means (13) are arranged to convert the movements of the user's fingers into commands for the remote equipment (11).

13. Apparatus as claimed in claim 11 or 12, **characterised in that** said image processing means (13) are programmable processing means and are supplied by the remote equipment (11) with an image processing software specific for a running application.

14. Apparatus as claimed in any of claims 2 to 10, **characterised in that** the processing means (3) in the remote equipment (11) include means for processing recorded images relevant to the movements of the user's fingers on the virtual keyboard (2A) or the virtual control panel, and the camera (7) is arranged to supply the remote equipment (11) with packetised differential information.

15. Apparatus as claimed in any of claims 2 to 10, **characterised in that** the processing means (3) in the remote equipment (11) include means for processing recorded images relevant to the movements of the user's fingers on the virtual keyboard (2A) or the virtual control panel, and the camera (7) is arranged to supply the remote equipment (11) with slow video images or low resolution video images.

16. Apparatus as claimed in claim 2, **characterised in that** it comprises a speech processor for receiving and interpreting commands sent by the user in voice form.

17. Apparatus as claimed in claim 16, **characterised in that** said speech processor is included in the processing means (3) in the remote equipment (11).

18. Apparatus as claimed in claim 2, **characterised in that** said coupling means (12) are arranged to allow connection of said user's equipment (10) with an external conventional display unit or an external conventional keyboard.

19. Apparatus as claimed in any preceding claim, **characterised in that** said presenting means (6) are arranged to create a virtual display unit (15) from visual information transmitted as packetised differential information, slow video signals, low resolution video signals or broadband signals, depending on the nature of the communication means (5) and the telecommunications network (8) and the video quality demanded by the running application.

20. Apparatus as claimed in any preceding claim, characterised that said processing and storage means (3, 4) form a virtual PC supporting one or more applications.

21. Apparatus as claimed in any preceding claim, characterised that said processing and storage means (3, 4) form a plurality of virtual PCs each supporting an application.

22. Apparatus as claimed in any preceding claim, characterised that said processing and storage means (3, 4) include a conventional PC connected to the network (8).
